# EUROPEAN PATENT APPLICATION

(11) **EP 4 687 206 A1**
(43) Date of publication of application: **04.02.2026**
(21) Application number: 25153301.4
(22) Date of filing: 22.01.2025
(51) Int. Cl.: H01M 50/213, H01M 50/231

(54) **CELL BRACKET, METHOD FOR MANUFACTURING CELL BRACKET, AND BATTERY PACK**

(30) Priority: 01.08.2024 CN 202411049117; 01.08.2024 CN 202421848214 U
(71) Applicant: Eve Energy Co., Ltd., Huizhou, Guangdong 516006 (CN)
(72) Inventor: QIU, Wencong, Huizhou, Guangdong, 516006 (CN); ZHANG, Guojiang, Huizhou, Guangdong, 516006 (CN); XU, Yuhong, Huizhou, Guangdong, 516006 (CN)
(74) Representative: Herrero & Asociados, S.L.

(57) **Abstract**

A cell bracket (1), a method for preparing the cell bracket, and a battery pack (1000) are provided. The cell bracket (1) includes a substrate (10) and a coating layer (30) wrapped around the substrate (10). The substrate (10) is made of glass fiber or carbon fiber. The coating layer (30) includes a resin component (300). The substrate (10) is provided with first pressure relief holes (110), and the resin component (300) is provided with second pressure relief holes (310). The first pressure relief holes (110) overlap with the second pressure relief holes (310) to form pressure relief holes (410) configured to support cylindrical cells.

## Description

### TECHNICAL FIELD

The present disclosure relates to the field of battery technologies, and in particular, to a cell bracket, a method for manufacturing the cell bracket, and a battery pack.

### BACKGROUND

With the continuous development of battery technologies, cylindrical batteries are increasingly favored as one type of lithium batteries. A cylindrical battery usually includes cells and a cell bracket. The cells are arranged on the cell bracket, and physical isolation between a plurality of cells is achieved by means of the cell bracket, thereby avoiding short circuits. In addition, it is also beneficial for heat dissipation of the cells, and improves stability of a battery pack structure.

With the pursuit of high energy density of the battery pack in the industry, the volume of the battery packs is designed to be larger and larger, thus requiring larger cell brackets to support the cells.

In related technologies, multiple conventional polypropylene (PP) plastic brackets are usually spliced to meet the requirements of large-size cell brackets. This approach not only increases the manufacturing costs and reduces work efficiency; meanwhile, the strength of the connection between two adjacent PP plastic holders is low, which poses a risk of cracking or even fracture during use.

### SUMMARY

In a first aspect, embodiments of the present disclosure provides a cell bracket that includes a substrate and a coating layer wrapped around the substrate. The substrate is made of glass fiber or carbon fiber. The substrate is provided with a plurality of first pressure relief holes. The coating layer comprises a resin component. The resin component is provided with a plurality of second pressure relief holes. The plurality of first pressure relief holes overlap with the plurality of second pressure relief holes to form a plurality of pressure relief holes configured to support a plurality of cylindrical cells.

In a second aspect, embodiments of the present disclosure provides a method for manufacturing a cell bracket, which is used to prepare the cell bracket described above. The method for manufacturing the cell bracket includes :

laying a substrate made of glass fiber or carbon fiber flat on a working table, with a gap between the substrate and the working table;
forming a plurality of first pressure relief holes in the substrate;
injecting resin onto the substrate, and drying the resin to form a resin component wrapped around the substrate, thereby obtaining a cell bracket comprising the substrate and the resin component; and
forming a plurality of second pressure relief holes on the resin component; wherein the plurality of second pressure relief holes overlap with the plurality of first pressure relief holes to form a plurality of pressure relief holes that are configured to support a plurality of cylindrical cells.

In a third aspect, embodiments of the present disclosure provides a battery pack that includes cylindrical cells and the cell bracket described above. The cylindrical cells are provided on the cell bracket.

The cell bracket in the present disclosure can be integrally formed by the resin component and the substratefiberfiber. In this way, an operator only needs to design the size of the substrate according to the required size of the cell bracket, then the resin component is integrally formed with the substrate, so that the size of the cell bracket can be flexibly designed. That is, the operator can design a larger size of the cell bracket to meet different requirements. Thus, the steps of splicing of multiple plastic brackets in related technologies can be omitted, thereby improving work efficiency and saving costs. At the same time, in the present disclosure, the resin component is integrally formed with the substrate, so that the strength of the cell bracket can be improved, and the service life is prolonged. That is, compared with plastic brackets in the traditional technologies, the cell bracket in the present disclosure has a higher mechanical strength.

The present disclosure also provides a method for manufacturing a cell bracket, in which the cell bracket is formed by injecting resin to the glass fiber or the carbon fiber, which can process a large-size cell bracket without the need for related technical splicing processes, improving work efficiency and saving costs. Meanwhile, the cell bracket manufactured by the method provided in present disclosure has high mechanical strength and longer service life.

The present disclosure further provides a battery pack. The battery pack has characteristics of high processing efficiency, high strength and low cost.

### BRIEF DESCRIPTION OF THE DRAWINGS

FIG. 1 is a first exploded schematic diagram of a cell bracket provided in embodiments of the present disclosure.
FIG. 2 is an enlarged schematic diagram of the partial structure at region A in FIG. 1.
FIG. 3 is a first schematic diagram of a method for manufacturing a cell bracket provided in embodiments of the present disclosure.
FIG. 4 is a second exploded schematic diagram of a cell bracket provided in embodiments of the present disclosure.
FIG. 5 is an enlarged schematic diagram of the partial structure at region B in FIG. 4.
FIG 6 is a second schematic diagram of a method for manufacturing a cell bracket provided in embodiments of the present disclosure.
FIG. 7 is a partial schematic structural diagram of a cell bracket provided in embodiments of the present disclosure.
FIG. 8 is a flow diagram of a method for manufacturing a cell bracket provided in some embodiments of the present disclosure.
FIG. 9 is a schematic diagram of a battery pack according to some embodiments of the present disclosure.

### Reference numerals:

1000, battery pack; 1, cell bracket; 10, substrate; 110, first pressure relief hole; 30, coating layer; 300, resin component; 310, second pressure relief hole; 410, pressure relief hole; 420, connecting portion; 430, boss; 2, cylindrical cell.

### DETAILED DESCRIPTION

Embodiments of the present disclosure provide a cell bracket, which can meet a requirement for a large-size cell bracket without splicing, has high strength, can improve work efficiency, and saves costs.

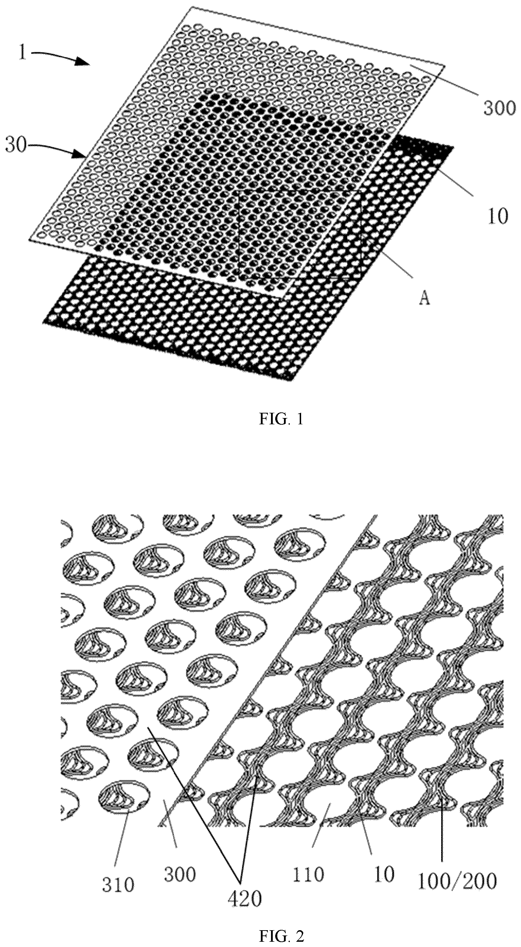

As shown in FIGs. 1 to 7, the cell bracket 1 mainly includes a substrate 10 and a coating layer 30 wrapped around the substrate 10. The substrate 10 is made of glass fiber or carbon fiber, and the coating layer 30 includes a resin component 300. The substrate 10 is provided with a plurality of first pressure relief holes 110, the resin component 300 is provided with a plurality of second pressure relief holes 310. The plurality of first pressure relief holes 110 overlap with the plurality of second pressure relief holes 310 to form a plurality of pressure relief holes 410 configured to support a plurality of cylindrical cells (not shown in the figures). That is, the cell bracket 1 in this embodiment may be integrally formed by the resin component 300 and the substrate 10. In this way, an operator only needs to design the size of the substrate 10 according to the required size of the cell bracket 1, and then the resin component 300 is integrally form with the substrate 10, so that the size of the cell bracket 1 can be flexibly designed. That is, the operator can design a larger size of the cell bracket to meet different requirements. Thus, the steps of splicing of multiple plastic brackets in related technologies can be omitted, which can improve work efficiency and save costs. Meanwhile, in this embodiment, the resin component 300 is integrally formed with the substrate 10, which can improve the strength of the cell bracket and prolong the service life of the cell bracket. That is, compared to plastic brackets in conventional technologies, the cell bracket 1 in this embodiment has a higher mechanical strength.

In this embodiment, the resin component 300 may be fully wrapped around the substrate 10, or may be partially wrapped around the substrate 10. That is, the resin component 300 wraps a part of the substrate 10, and the other part of the substrate 10 is exposed outside the resin component 300. For example, an upper surface of the other part of the substrate 10 may be exposed outside the resin component 300, so as to improve flexibility of manufacturing the cell bracket 1.

In this embodiment, the plurality of pressure relief holes 410 are provided to be arranged in an array, and the pressure relief holes 410 penetrate through two opposite sides of the cell bracket 1. Each pressure relief hole 410 supports a cylindrical cell. By arranging the plurality of pressure relief holes 410 in an array, intervals between two adjacent cylindrical cells are equal, thereby improving a heat dissipation effect between the cylindrical cells, and avoiding or reducing heat concentration.

As shown in Figs. 2, 5, and 7, in this embodiment, the cell bracket 1 includes a connecting portion 420 provided between every two adjacent pressure relief holes 410. Since the cell bracket 1 in this embodiment is integrally formed from the resin component 300 and the substrate 10, materials of the connecting portion 420 containthe glass fiber or the carbon fiber. The arrangement of the connecting portion 420 can connect two adjacent pressure relief holes 410, thereby improving the mechanical strength and integrity of the cell bracket 1 and prolonging the service life of the cell bracket 1.

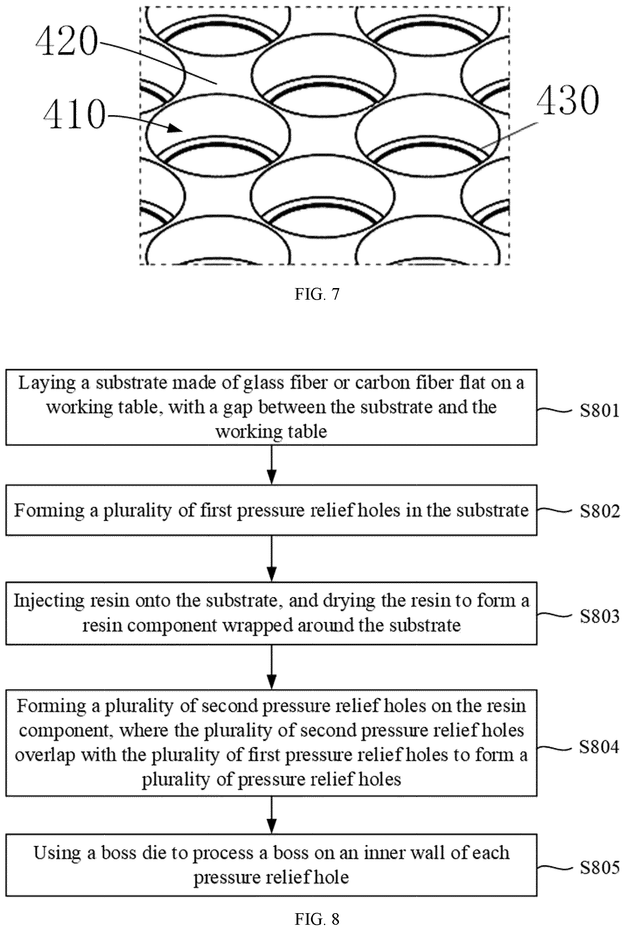

As shown in FIG. 7, in this embodiment, an inner wall of the pressure relief hole 410 is convexly provided with a boss 430, which is configured to support the cylindrical cell. Materials of the boss 430 contain the glass fiber or the carbon fiber. The boss 430 is integrally formed with the resin component 300. The arrangement of the boss 430 can provide support for the cylindrical cell, thereby preventing the cylindrical cell from falling out of the pressure relief hole 410. A projection area of the boss 430 in each pressure relief hole 410 is smaller than a projection area of the pressure relief hole 410, thereby preventing the pressure relief hole 410 from being completely blocked by the boss 430, which is beneficial for high-temperature and high-pressure gas inside the cylindrical cell to be discharged from the pressure relief hole 410 when thermal runaway occurs in the cylindrical cell, thereby avoiding the danger of explosion and the like.

In this embodiment, a ratio of a length of the connecting portion 420 to a diameter of the pressure relief hole 410 is set between 0.8 and 1.5. For example, a ratio of the length of the connecting portion 420 to the diameter of the pressure relief hole 410 may be set to values such as 0.8, 1.0, 1.2, 1.5, etc.

In this embodiment, the pressure relief holes 410 are circular or square, for example, circular pressure relief holes, which can be adapted to the cylindrical cells and allow for more cylindrical cells to be arranged on the cell bracket. Of course, the operator can also set the pressure relief holes in other shapes, which will not be repeated here.

In this embodiment, the resin component 300 is injection molded with either the glass fiber or the carbon fiber, and the injection temperature may be set between 225°C and 250°C.

As shown in FIG. 7, in this embodiment, the pressure relief holes 410 are arranged in multiple columns, with two adjacent columns of pressure relief holes 410 arranged in a staggered manner, so that more pressure relief holes 410 can be arranged on a cell bracket having a certain size, thereby improving the energy density of a battery pack and saving costs.

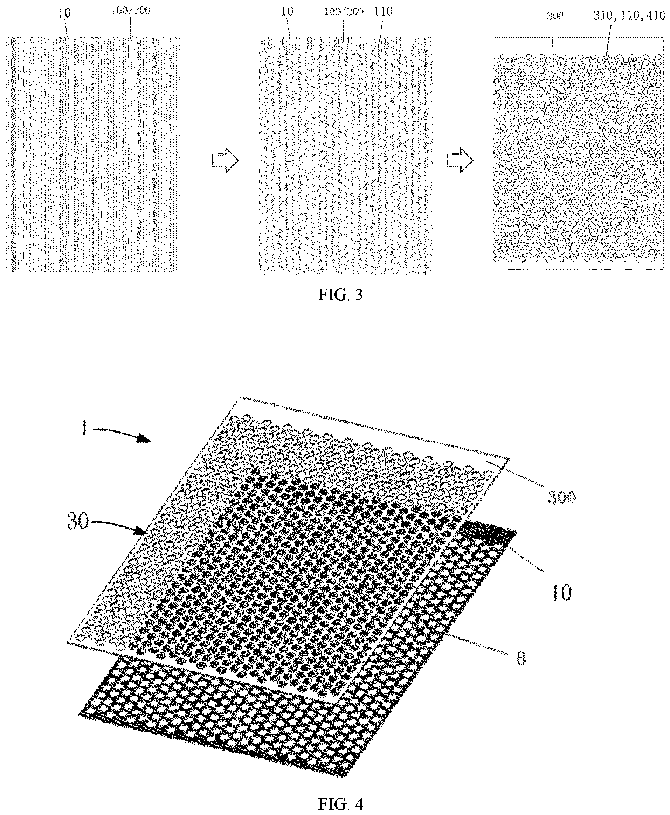

As shown in Figs. 3, 6, and 8, this embodiment provides a method for manufacturing a cell bracket, which is configured to manufacture the above-mentioned cell bracket 1. The method for manufacturing the cell bracket includes the following steps.

Step 801, laying a substrate 10 made of glass fiber or carbon fiber flat on a working table, with a gap between the substrate 10 and the working table.

An operator can use an existing automated equipment to lay the substrate 10 on the working table, so as to ensure that there is a gap between the substrate 10 and the working table.

Step 802, forming a plurality of first pressure relief holes 110 in the substrate 10.

In some embodiments, as shown in FIG. 2 to FIG. 3, the operator can use a concave-convex mold to extrude a part of the materials of the substrate 10, such as the glass fiber or the carbon fiber to form the first pressure relief holes 110. A single hole extrusion pressure applied by the concave-convex mold to the glass fiber and the carbon fiber can be set between 10 N and 100 N.

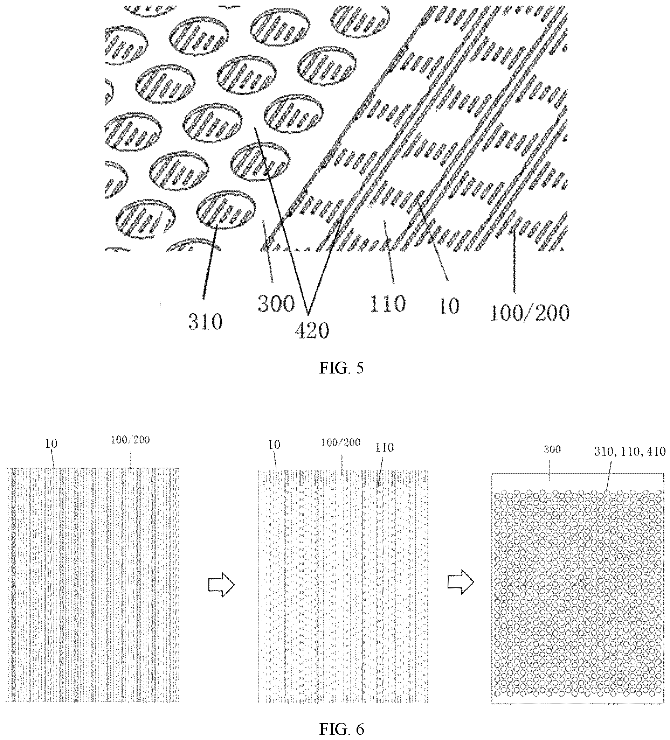

In some embodiments, as shown in FIG. 5 to FIG. 6, the operator can also use a cutting die to cut off a part of the materials of the substrate 10, such as the glass fiber or the carbon fiber to form the first pressure relief holes 110. Regardless of whether a concave-convex mold or a cutting die is used to form the first pressure relief holes 110, the first pressure relief hole 110 can be formed on the substrate 10, so that it is unnecessary to use additional machining tools to process the first pressure relief holes 110 in the later stage when the cell bracket becomes a part, thereby improving work efficiency and saving costs.

It can be understood that the convex concave mold and the cutting die are both conventional components, and their structures and working principle will not be further described herein.

In this embodiment, as shown in FIGs. 2, 3, 5, and 6, the substrate 10 is formed by arranging a plurality of glass fiber strips 100, and extension directions of the plurality of glass fiber strips 100 are the same. Alternatively, the substrate 10 is formed by arranging a plurality of carbon fiber strips 200, and extension directions of the plurality of carbon fiber strips 200 are the same.

In this embodiment, two adjacent glass fiber strips 100 or two adjacent carbon fiber strips 200 are spaced apart by a distance of 0 mm~2 cm. For example, the spacing may be set to 0 mm, 5 mm, 1 cm, 2 cm, and so on. That is, there can be spacing or zero spacing between two adjacent glass fiber strips or between two adjacent carbon fiber strips, which can improve the flexibility of the layout of the glass fiber strips or the carbon fiber strips, and the operator can flexibly arrange the glass fiber strips and the carbon fiber strips according to actual needs. When there is spacing between two adjacent glass fiber strips or two adjacent carbon fiber strips, the number of glass fiber strips or carbon fiber strips can be reduced, thereby saving costs, and making the cell bracket lightweight. When there is zero spacing between two adjacent glass fiber strips or two adjacent carbon fiber strips, the mechanical strength of the cell bracket can be improved, and the service life of the cell bracket can be prolonged.

In this embodiment, two adjacent glass fiber strips 100 or two adjacent carbon fiber strips 200 are arranged at equal intervals, which can improve the stress condition of the cell bracket, so that the cell bracket is subjected to uniform stress, and the phenomenon of stress concentration is avoided.

Step 803, injecting resin onto the substrate 10, and drying the resin to form a resin component 300 wrapped around the substrate 10, thereby obtaining a cell bracket 1 including the substrate 10 and the resin component 300.

Due to the gap between the substrate 10 and the working table, it can be ensured that the resin can flow to a lower surface of the substrate 10, so that the resin component 300 can fully wrap around the substrate 10, thereby improving the stability and reliability of the cell bracket, and at the same time, avoiding low strength of the cell bracket caused by the exposure of the substrate 10.

Step 804, forming a plurality of second pressure relief holes 310 on the resin component 300, where the plurality of second pressure relief holes 310 overlap with the plurality of first pressure relief holes 110 to form a plurality of pressure relief holes 410 that are configured to support a plurality of cylindrical cells.

In this embodiment, the step 804 specifically includes:
heating the resin at positions corresponding to the plurality of first pressure relief holes 110 to a molten state, to form the plurality of second pressure relief holes 310 on the resin component 300 that correspond one-to-one with the plurality of first pressure relief hole 110.

Step 805, using a boss die to process a boss 430 on an inner wall of each pressure relief hole 410, as shown in FIG. 7.

In this case, the melted resin is mixed with the glass fiber or the carbon fiber to form the second pressure relief holes 310 at positions corresponding to the first pressure relief holes 110, and the first pressure relief holes 110 and the second pressure relief holes 310 together enclose the pressure relief holes 410 configured to support the cylindrical cells. The boss die can be used to process an inner wall of the second pressure relief hole 310 at one side of the substrate 10, causing a diameter of the second pressure relief hole 310 at one side of the substrate 10 to be greater than a diameter of the first pressure relief hole 110, thereby forming the boss 430 in the pressure relief hole 410. The hollow position in the pressure relief hole 410 is a pressure relief position of the cylindrical cell when thermal runaway occurs, where there is no glass fibers and carbon fibers. Both the boss 430 in the pressure relief hole 410 and the connecting portion 420 of the cell bracket 1 contain the glass fiber or the carbon fiber. It can be understood that the boss die in this embodiment belongs to conventional components, and its structure and working principle will not be further described herein.

In this embodiment, a ratio of an injection volume of the resin to a volume of the substrate 10 is 5:1-20:1, thereby improving mechanical strength of the cell bracket 1 while ensuring good fusion between the resin and the substrate 10 and avoiding exposure of the substrate 10.

For example, a ratio of an injection volume of the resin to a volume of the substrate 10 may be set to 5:1, 10:1, 15:1, 20:1, and so on. When the ratio is less than 5:1, the substrate 10 may be exposed, which reduces the mechanical strength of the cell bracket. When the ratio is greater than 20:1, the thickness of the manufactured cell bracket is too thick, which not only wastes the cost of resin, but also additionally occupies an inner volume of the battery pack, which is bad for the improvement of the energy density of the battery pack.

In this embodiment, the heating temperature of the resin is set to be between 225°C and 250°C. Due to the melting temperature of the glass fiber is 700°C and 900°C, while the melting temperature of the carbon fiber is usually above 2500°C, setting the heating temperature of the resin to be 225°C~250°C can not only ensure that the resin can be melted and be molded integrally with the glass fiber or the carbon fiber, but also ensure that the glass fiber and the carbon fiber are not damaged, thereby saving energy consumption and improving work efficiency.

The method for manufacturing the above-mentioned cell bracket 1 is simple in steps, and the cell bracket 1 is formed by injecting resin to the glass fiber or the carbon fiber, which can process a large-size cell bracket without the need for related technical splicing processes, improving work efficiency and saving costs. Meanwhile, the cell bracket 1 manufactured by the method provided in this embodiment has high mechanical strength and longer service life.

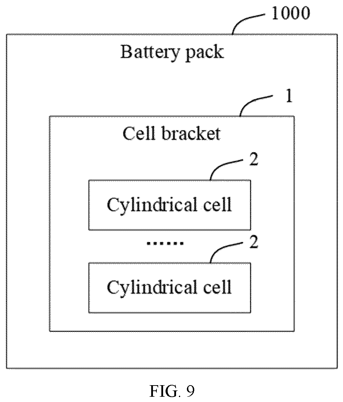

As shown in FIG.9, the present embodiment further provides a battery pack 1000. The battery pack 1000 includes cylindrical cells 2 and the above-mentioned cell bracket 1. The cylindrical cells 2 are provided on the cell bracket 1. There are a plurality of pressure relief holes 410 on the cell bracket 1, and there are a plurality of cylindrical cells 2 are provided, with each cylindrical cell 2 correspondingly provided in one pressure relief hole 410.

Since the battery pack 1000 contains the above-mentioned cell bracket 1, the battery pack 1000 has characteristics of high processing efficiency, high strength and low cost.

The present embodiment further provides an electric device. The electric device includes the above-mentioned battery pack 1000. The electric device has characteristics of high processing efficiency, high strength and low cost.

## Claims

1. A cell bracket (1), comprising:
a substrate (10), wherein the substrate (10) is made of glass fiber or carbon fiber; the substrate (10) is provided with a plurality of first pressure relief holes (110); and
a coating layer (30) wrapped around the substrate (10); wherein the coating layer (30) comprises a resin component (300); the resin component (300) is provided with a plurality of second pressure relief holes (310); the plurality of first pressure relief holes (110) overlap with the plurality of second pressure relief holes (310) to form a plurality of pressure relief holes (410) configured to support a plurality of cylindrical cells (2).

2. The cell bracket (1) according to claim 1, wherein the plurality of pressure relief holes (410) are arranged in an array, and the pressure relief holes (410) penetrate through two opposite sides of the cell bracket (1).

3. The cell bracket (1) according to claim 2, wherein the cell bracket (1) comprises a connecting portion (420) between every two adjacent pressure relief holes (410), and materials of the connecting portion (420) contain the glass fiber or the carbon fiber.

4. The cell bracket (1) according to any one of claims 1-3, wherein an inner wall of the pressure relief hole (410) is convexly provided with a boss (430); wherein the boss (430) is configured to support the cylindrical cell (2); materials of the boss (430) contain the glass fiber or the carbon fiber.

5. The cell bracket (1) according to any one of claims 1-3, wherein the substrate (10) is formed by arranging a plurality of glass fiber strips (100), and extension directions of the plurality of glass fiber strips (100) are the same; or the carbon fiber is formed by arranging a plurality of carbon fiber strips (200), and the extending directions of the plurality of carbon fiber strips (200 are the same.

6. The cell bracket (1) according to claim 5, wherein two adjacent glass fiber strips (100) or two adjacent carbon fiber strips (200) are spaced apart by a distance of 0 mm~2 cm.

7. The cell bracket (1) according to claim 6, wherein two adjacent glass fiber strips (100) or two adjacent carbon fiber strips (200) are arranged at equal intervals.

8. The cell bracket (1) according to claim 1, wherein the resin component (300) is integrally formed with the substrate (10).

9. A method for manufacturing a cell bracket, which is configured for manufacturing the cell bracket (1) of any one of claims 1-8; the method comprising:
laying a substrate (10) made of glass fiber or carbon fiber flat on a working table, with a gap between the substrate (10) and the working table;
forming a plurality of first pressure relief holes (110) in the substrate (10);
injecting resin onto the substrate (10), and drying the resin to form a resin component (300) wrapped around the substrate (10), thereby obtaining a cell bracket (1) comprising the substrate (10) and the resin component (300); and
forming a plurality of second pressure relief holes (310) on the resin component (300); wherein the plurality of second pressure relief holes (310) overlap with the plurality of first pressure relief holes (110) to form a plurality of pressure relief holes (410) that are configured to support a plurality of cylindrical cells (2).

10. The method according to claim 9, wherein the forming a plurality of first pressure relief holes (110) in the substrate (10) comprises:
extruding a part of the materials of the substrate (10) through a concave-convex mold to form the first pressure relief holes (110);
or, cutting off a part of the materials of the substrate (10) through a cutting die to form the first pressure relief holes (110).

11. The method according to claim 9, wherein the forming a plurality of second pressure relief holes (310) on the resin component (300) comprises:
heating the resin at positions corresponding to the plurality of first pressure relief holes (110) to a molten state, to form the plurality of second pressure relief holes (310) on the resin component (300) that correspond one-to-one with the plurality of first pressure relief hole (110).

12. The method according to claim 9 or 11, further comprising:
using a boss die to process a boss (430) on an inner wall of each pressure relief hole (410).

13. The method according to claim 9, wherein a ratio of an injection volume of the resin to a volume of the substrate (10) is 5:1-20:1.

14. The method according to claim 11, wherein a heating temperature range of the resin is set to 225°C to 250°C.

15. A battery pack (1000), comprising a plurality of cylindrical cells (2) and the cell bracket (1) of any one of claims 1 to 8, wherein the cylindrical cells (2) are provided on the cell bracket (1).
